# EUROPEAN PATENT SPECIFICATION

(11) **EP 3 366 911 B1**
(45) Date of publication and mention of the grant of the patent: **04.12.2019**
(21) Application number: 18157397.3
(22) Date of filing: 19.02.2018
(51) Int. Cl.: F02M 35/108, F02B 31/08, F02B 39/10, F02D 41/00, F02B 33/44, F02D 13/02, F02B 37/12

(54) **SUPERCHARGED ENGINE WITH SUPERCHARGER ACTIVE CONTROL SYSTEM**
BRENNKRAFTMASCHINE MIT SUPERLADER MIT AKTIVER STEUERUNG DES KOMPRESSORS
MOTEUR SURALIMENTE AVEC CONTROLE ACTIVE DU COMPRESSEUR

(30) Priority: 24.02.2017 IT 201700021386
(43) Date of publication of application: 29.08.2018
(73) Proprietor: Labanca, Samuele, 40026 Imola (BO) (IT)
(72) Inventor: Labanca, Samuele, 40026 Imola (BO) (IT)
(74) Representative: Casadei, Barbara

(56) References cited:
- EP-A1- 1 300 562
- EP-A1- 1 762 711
- WO-A1-2005/071241
- WO-A2-2015/011420
- DE-A1-102005 014 789
- US-A1- 2009 248 271
- US-B1- 7 076 954

## Description

This invention relates to an engine, preferably for vehicles, comprising a supercharging system and configured to optimize the possibility of obtaining additional power both by creating turbulence in at least one of the cylinders of the engine during an induction step thereof, and by compressing at least one intake flow entering the at least one cylinder during the induction step.

Vehicle engines commonly comprise at least one combustion chamber which may be defined, for example, inside at least one of the engine cylinders.

The combustion chamber is adapted to contain at least one working fluid.

The combustion chamber includes a piston which is subjected to movement within the chamber itself: for example, along an axis of extension of the chamber.

The movement is such that the working fluid is subjected to an engine cycle which may comprise an induction step to let the fluid into the chamber, a compression step to compress the fluid, a combustion step to ignite the fluid, an expansion step where the fluid expands and an exhaust step to let the fluid out of the chamber.

The fluid may, for example, be air or a mixture of air and fuel.

For each cycle, the piston movement may comprise two strokes of the piston, in a first direction and in a second direction, the second direction being opposite to the first direction, along the axis of extension of the chamber, or four strokes of the piston along the axis of extension, two of which in the first direction and temporally alternated with another two, which occur in the second direction. The engine can be considered as a two-stroke engine in the former case and a four-stroke engine in the latter case.

For each of its combustion chambers, the engine comprises one or more intake (or induction) ducts which are in fluid dynamic communication with the chamber in order to let respective intake (or induction) flows of the fluid into the chamber during the induction step.

The speed field of the fluid inside the chamber may in turn influence the physical properties and, in particular, the kinematic properties of the intake flows.

More specifically, it has been found that at the induction step, a turbulence in the speed field of the fluid inside the chamber can increase the power delivered by the engine.

For each of its combustion chambers, the engine comprises one or more exhaust ducts which are in fluid dynamic communication with the chamber in order to receive respective fluid flows from the chamber during the exhaust step.

These engines may be provided with at least one supercharging system configured to increase the total flow rate of intake flows entering the chamber in order to increase the power delivered by the engine.

Current supercharging systems comprise a turbo compressor. This turbo compressor includes a turbine and a compressor.

The turbine is disposed relative to the one or more exhaust ducts in such a way as to be able to activate one or more of the exhaust flows.

The turbo compressor is configured to transfer to a compressor the power delivered by the turbine.

The compressor is disposed relative to the one or more intake ducts in such a way that when the rotating part of the compressor has a rotation speed due to the power received from the turbine, the flow rate of one or more of the intake flows during the induction step is greater than it would be if there were no turbo compressor.

As to obtaining turbulence in the fluid speed field inside the chamber, such turbulence can be generated by means of a divider valve operating in at least one of the intake ducts.

The divider valve produces a difference between at least two of the induction flows in at least two respective induction ducts, including the one in which the valve operates. This difference, which could be a difference between the respective flow rates can produce turbulence in the fluid inside the chamber which improves the filling of the combustion chamber.

Division by the divider valve, however, causes a decrease in the total flow entering the chamber and this decrease cannot be prevented by an increase in the power delivered by the turbine of the turbo compressor because the speed of the turbine depends mechanically on the exhaust flows leaving the combustion chamber.

In this case, generating the turbulence in the fluid inside the chamber may be at the expense of the very effect we want to achieve using the supercharging system, under equal conditions of power input into the supercharging system itself.

Turbulence can also be generated by giving at least two of the intake ducts a mutually different geometry, or by giving at least one of the intake ducts a geometry such as to generate vortical motions in the respective intake flow when it is still inside the intake duct. In these cases, the structure of the supercharging system is very complex.

Turbulence can also be generated by positioning at least one of the intake ducts in such a way that at least the projection, onto a plane transverse to the axis of extension of the chamber, of the direction of the speed of at least one intake flow entering the chamber from that intake duct, is offset relative to that axis of extension.

The power delivered by the engine may, for example, be correlated with an angular speed about the axis of a power-driven shaft, which may be the axis of an output shaft of the engine, and with the torque generated by the engine itself about that power-driven shaft.

Current supercharging systems do not allow the supercharging system to operate independently of the power delivered by the engine.

In effect, the power delivered by the turbine of the turbo compressor depends on the physical and/or kinematic properties of the exhaust flows which are in turn dependent on the power delivered by the engine.

That means that, at low engine rpm (angular speed about the power-driven shaft), it is not possible to obtain adequate supercharging, also on account of the delays inherent in the turbine and compressor.

Moreover, if the engine can run on at least two different fuels, it may be necessary for the speed field, and hence the turbulence, of the fluid inside the chamber, to be different according to whether the engine cycle is being performed with one fuel or the other.

EP1762711A1 discloses a control for an electrically driven supercharger. DE102005014789A1 discloses a parallel compressor and clinder intake structure and a method for controlling the air-fuel mixtures.

One aim of this disclosure is to provide a supercharged engine which allows better use to be made of the possibility of creating turbulence in the combustion chamber in order to increase the power delivered by the engine, compared to supercharged engines known at present.

Another aim of this disclosure is to provide a supercharged engine which allows good use to be made of the possibility of creating turbulence in the combustion chamber with a system which is mechanically simpler than those of supercharged engines known at present.

Another aim of this disclosure is to provide a supercharged engine which allows obtaining an improvement in drive torque and delivered power in a wider range of engine power statuses.

Another aim of this disclosure is to provide a supercharged engine which allows automatically controlling the extent of supercharging without this being in any way restricted by exhaust flows from the combustion chamber, in order to optimize turbulence for any engine power status without any restriction set by the exhaust flows and thus without any "natural restriction" set by the power status.

Another aim of this disclosure is to provide a supercharged engine which allows supercharging to be optimized in the event of a switch to a different type of fuel in an engine which can run on at least two different fuels.

Another aim of this disclosure is to provide a supercharged engine which allows automatic ultraprecise regulation of intake flows compatibly with the type of fuel used.

That way, the vehicle engine can allow attaining a high compression ratio and higher energy efficiency.

These aims are achieved by an engine having the features set out in any one of, or in any combination of, one or more of the accompanying claims, intended to protect the engine.

These aims are achieved by a method for operating an engine having the features set out in any one of, or in any combination of, one or more of the accompanying method claims.

According to a first aspect of it, this disclosure relates to an engine.

According to a second aspect of it, this disclosure relates to method for operating an engine. An engine according to the first aspect can implement a method according to the second aspect.

The features of an engine according to the first aspect of this disclosure and of an operating method according to the second aspect of this disclosure will become clearer from the following detailed description of respective embodiments of the engine and method given by way of nonlimiting examples of the concepts claimed.

The following detailed description refers to the accompanying drawings, in which:
- Figure 1 is a schematic, explanatory diagram of a possible embodiment of the operation of an engine according to the first aspect of this disclosure;
- Figure 2 and Figure 3 are each an explanatory flow diagram of a part of a possible embodiment of a method according to the second aspect of this disclosure;
- Figure 4 schematically represents the control system forming part of the engine of Figure 1.

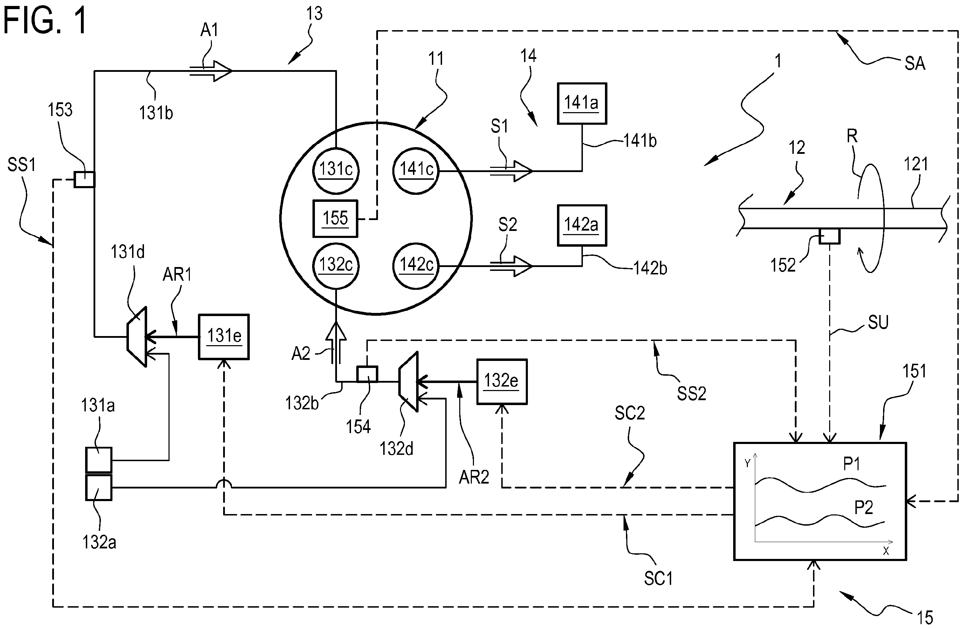

The numeral 1 in the block diagram of Figure 1 denotes in its entirety the possible embodiment of the engine according to the first aspect of this disclosure.

The engine 1 comprises a combustion chamber 11 for containing a working fluid. The engine 1 is configured to allow the fluid to be subjected to a working cycle in the combustion chamber 11. The working cycle comprises an intake step to let the fluid into the chamber 11, a compression step to compress the fluid in the chamber 11, a combustion step to ignite the fluid in the chamber 11, an expansion step where the fluid expands in the chamber 11 and an exhaust step to let the fluid out of the chamber 11.

We may consider as the speed field the speed field of the fluid inside the combustion chamber 11 during such a working cycle. We may therefore consider a turbulence in this speed field. Such a turbulence may be considered as the spatial distribution of the vorticity of this speed field within the combustion chamber.

The engine 1 comprises a piston situated in the chamber. The piston is not shown in Figure 1.

The engine 1 is configured in such a way that the working cycle can cause a reciprocating translational movement of the piston in the chamber 11.

The engine 1 comprises an output 12 of the engine 1.

The engine 1 is configured in such a way that the reciprocating translational movement produces a power delivered by the engine 1 through the output 12.

The power delivered by the engine 1 may be correlated with a physical output quantity. That means the time trend of this physical output quantity influences the time trend of the delivered power and vice versa.

The output 12 of the engine 1 may comprise a shaft 121.

The engine is configured in such a way that the reciprocating translational movement of the piston causes the shaft 121 to rotate about itself. This rotational movement may occur, for example, in the direction indicated by the arrow R. The physical output quantity may be a speed or acceleration at which the rotational movement of the shaft 121 occurs.

The speed at which the rotational movement of the shaft 121 occurs may be defined as the angular speed of the shaft 121.

The acceleration at which the rotational movement of the shaft 121 occurs may be defined as the angular acceleration of the shaft 121.

The engine 1 comprises a supercharging system 13. The supercharging system 13 is configured to generate at least one forced intake flow of the fluid into the chamber 11. By forced intake is meant an intake additional to that which would be produced only by the translational movement of the piston in the combustion chamber 11 during the intake step.

This at least one intake flow is physically characterized by at least one physical status quantity. The physical status quantity may be the flow rate of the at least one intake flow.

The supercharging system 13 is configured in such a way that the at least one intake flow enters the chamber 11 during the aforementioned intake step.

The supercharging system 13 is configured in such a way that the time trend of the at least one intake flow rate influences the time trend of the aforementioned turbulence.

The supercharging system 13 comprises at least one source. The at least one source may comprise, for example, at least one inlet section in communication with the atmosphere outside the engine 1.

The supercharging system 13 comprises at least one intake duct. The at least one intake duct is for containing the at least one intake flow.

The supercharging system 13 for generating the at least one intake flow is configured in such a way that the at least one intake duct receives the fluid from the at least one source so as to create the at least one intake flow.

The supercharging system 13 comprises at least one intake valve. The supercharging system 13 is configured in such a way that the at least one intake duct lets the at least one intake flow into the chamber 11 through the at least one intake valve.

The supercharging system 13 comprises at least one compressor. The supercharging system 13 is configured in such a way that the at least one compressor can be subjected to a rotational movement. The rotational movement of the at least one compressor is physically characterized by at least one physical control quantity. The at least one physical status quantity is correlated with the at least one physical control quantity. That means the time trend of the at least one physical control quantity influences and/or determines the time trend of the at least one physical status quantity. The physical control quantity could be the speed or acceleration of the rotational movement of the at least one compressor.

Thus, the time trend of the speed and/or acceleration of this rotational movement influences the time trend of the flow rate of the at least one intake flow. For this purpose, the at least one compressor is in communication with the at least one intake duct. The at least one compressor might, for example, operate between the at least one source and the at least one intake duct or be disposed along the at least one intake duct.

The supercharging system 13 comprises at least one intake motor. The supercharging system 13 is configured in such a way that the at least one intake motor can regulate the at least one physical control quantity and hence, the speed or acceleration of the rotational movement of the at least one compressor. The at least one motor may be, for example, an electric motor.

The at least one intake flow might comprise a first forced intake flow of the fluid into the chamber 11 and a second forced intake flow of the fluid into the chamber 11.

In this case, the aforementioned at least one physical status quantity comprises a first physical status quantity and a second physical status quantity.

The first intake flow and the second intake flow are physically characterized by the first status quantity and the second status quantity, respectively. The first status quantity and the second status quantity may be the flow rate of the first intake flow and the flow rate of the second intake flow, respectively.

In Figure 1, the first intake flow is schematically represented by the arrow A1 and the second intake flow is schematically represented by the arrow A2.

In this case, the supercharging system 13 is configured in such a way that the first intake flow A1 and the second intake flow A2 enter the chamber 11 during the aforementioned intake step.

In this case, the supercharging system 13 is configured in such a way that the time trend of the flow rate of the first intake flow A1 and the time trend of the flow rate of the second intake flow A2 influence the time trend of the aforementioned turbulence.

In this case, the at least one source comprises a first source 131a and a second source 132a.

In this case, the at least one intake duct comprises a first intake duct 131b and a second intake duct 132b. The first intake duct 131b and the second intake duct 132b are for containing the first intake flow A1 and the second intake flow A2, respectively.

To generate the first intake flow A1 and the second intake flow A2, the supercharging system 13 is configured in such a way that the first intake duct 131b and the second intake duct 132b receive the fluid from the first source 131a and from the second source 132a, respectively, so as to create the first intake flow A1 and the second intake flow A2, respectively.

It should be remembered that the first source 131a and the second source 132a might be integrated in a single source.

The at least one intake valve comprises a first intake valve 131c and a second intake valve 132c. The supercharging system 13 is configured in such a way that the first intake duct 131b and the second intake duct 132b let the first intake flow A1 and the second intake flow A2 into the chamber 11, respectively, through the first intake valve 131c and the second intake valve 132c, respectively.

The at least one compressor comprises a first compressor 131d. The supercharging system 13 is configured in such a way that the first compressor 131d can be subjected to a respective rotational movement.

The at least one physical control quantity comprises a first physical control quantity.

The rotational movement of the first compressor 131d is physically characterized by the aforementioned first physical control quantity. The first physical status quantity is correlated with the first physical control quantity. That means the time trend of the first physical control quantity influences and/or determines the time trend of the first physical status quantity. The first physical control quantity could be the speed or acceleration of the rotational movement of the first compressor 131d.

Thus, the time trend of the speed and/or acceleration of this rotational movement of the first compressor 131d influences the time trend of the flow rate of the first intake flow A1. For this purpose, the first compressor 131d is in communication with the first intake duct 131b. The first compressor 131d might operate, for example, between the first source 131a and the first intake duct 131b, or it might be disposed along the first intake duct 131b.

The supercharging system 13 comprises a first intake motor 131e. The supercharging system 13 is configured in such a way that the first intake motor 131e can regulate the first physical control quantity and hence, the speed and/or acceleration of the rotational movement of the first compressor 131d. The first intake motor 131e may be, for example, an electric motor.

The at least one compressor comprises a second compressor 132d. The supercharging system 13 is configured in such a way that the second compressor 132d can be subjected to a respective rotational movement.

The at least one physical control quantity comprises a second physical control quantity.

The rotational movement of the second compressor 132d is physically characterized by the aforementioned second physical control quantity. The second physical status quantity is correlated with the second physical control quantity. That means the time trend of the second physical control quantity influences and/or determines the time trend of the second physical status quantity. The second physical control quantity could be the speed or acceleration of the rotational movement of the second compressor 132d. Thus, the time trend of the speed and/or acceleration of this rotational movement of the second compressor 132d influences the time trend of the flow rate of the second intake flow A2. For this purpose, the second compressor 132d is in communication with the second intake duct 132b. The second compressor 132d might operate, for example, between the second source 132a and the second intake duct 132b, or it might be disposed along the second intake duct 132b.

The supercharging system 13 comprises a second intake motor 132e. The supercharging system 13 is configured in such a way that the second intake motor 132e can regulate the second physical control quantity and hence, the speed and/or acceleration of the rotational movement of the second compressor 132d. The second intake motor 132d may be, for example, an electric motor.

The engine 1 comprises an exhaust system 14. The exhaust system 14 is configured to generate at least a first exhaust flow for discharging the fluid.

The exhaust system 14 could be configured to generate at least a second exhaust flow for discharging the fluid.

The exhaust system 14 is configured in such a way that the first exhaust flow is expelled from the combustion chamber 11 during the aforementioned exhaust step. The exhaust system 14 is configured in such a way that the second exhaust flow is expelled from the combustion chamber 11 during the aforementioned exhaust step.

The first exhaust flow is schematically represented by the arrow S1. The second exhaust flow is schematically represented by the arrow S2.

The exhaust system 14 comprises a first exhaust 141a. The first exhaust 141a may comprise, for example, at least one exhaust section in communication with the aforementioned atmosphere outside the engine 1.

The exhaust system 14 comprises a first exhaust duct 141b. The first exhaust duct 141b is for containing the first exhaust flow S1.

The exhaust system 14 comprises a first exhaust valve 141c. The exhaust system 14 is configured in such a way that the first exhaust duct 141b receives at least part of the fluid expelled from the chamber 11 through the first exhaust valve 141c, so as to produce the first exhaust flow S1.

The exhaust system 14 is configured in such a way that the first exhaust duct 141b discharges the first exhaust flow S1 through the first exhaust 141a.

The exhaust system 14 comprises a second exhaust 142a. The second exhaust 142a may comprise, for example, at least one exhaust section in communication with the aforementioned atmosphere outside the engine 1.

The exhaust system 14 comprises a second exhaust duct 142b. The second exhaust duct 142b is for containing the second exhaust flow S2.

The exhaust system 14 comprises a second exhaust valve 142c. The exhaust system 14 is configured in such a way that the second exhaust duct 142b receives at least part of the fluid expelled from the chamber 11 through the second exhaust valve 142c, so as to produce the second exhaust flow S2.

The exhaust system 14 is configured in such a way that the second exhaust duct 142b discharges the second exhaust flow S2 through the second exhaust 142a.

It should be remembered that the first exhaust 141a and the second exhaust 141a might be integrated in a single exhaust.

The engine 1 comprises a control system 15.

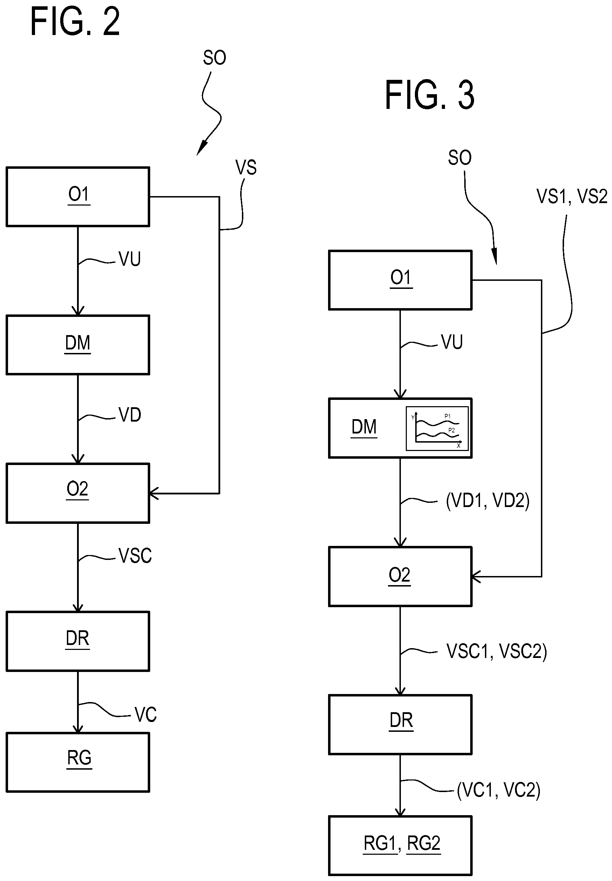

The control system 15 is configured to automatically perform a respective operating sequence for each time instant of a series of successive time instants. In Figures 2 and 3, the operating sequence is labelled SO.

The control system comprises a control unit 151, which may be any item of hardware: for example, an item of hardware comprising at least one computer medium.

The operating sequence SO comprises a first step of obtaining. The control unit 151 is configured and/or programmed to perform the first step of obtaining and/or cause it to be performed.

During the first step of obtaining, the control system 15 automatically obtains at least one output value. The output value corresponds to a current value of the aforementioned physical output quantity.

In Figures 2-3, the first step of obtaining is represented by the block labelled O1.

In Figure 2, the output value is represented by the arrow labelled VU.

The control system 15 comprises at least one output sensor 152.

The first step of obtaining O1 comprises a step of measuring, during which the output sensor 152 measures the output value VU. The first step of obtaining O1 comprises a step of sending, during which the output sensor 152 sends an output signal SU to the control unit 151. The output signal SU indicates the output value VU.

During the first step of obtaining O1, the control system 15 automatically obtains at least one status value. The at least one status value corresponds to a current value of the at least one physical status quantity.

In Figure 2, the at least one status value is represented by the arrow labelled VS.

The control system 15 comprises at least one status sensor.

The first step of obtaining O1 in turn comprises at least one other step of measuring, during which the at least one status sensor measures the status value VS. The first step of obtaining in turn comprises at least one other step of sending, during which the at least one status sensor sends at least one status signal to the control unit 151. The at least one status signal indicates the at least one status value VS.

The operating sequence SO comprises a step of determining. The control unit 151 is configured and/or programmed to perform the step of determining.

During the step of determining, the control system 15 automatically determines at least one target value of the at least one physical status quantity.

In Figures 2-3, the step of determining is represented by the block labelled DM.

In Figure 2, the at least one target value is represented by the arrow labelled VD.

The control unit 151 comprises at least one mathematical relation stored in the control unit 151 itself.

During the step of determining DM, the control system 15 automatically determines the at least one target value VD by calculating the at least one target value VD itself from the aforementioned output value VU and applying the aforementioned mathematical relation to that output value VU. The at least one mathematical relation places the physical output quantity in mathematical correlation with the at least one physical status quantity. The at least one mathematical relation is stored in the control unit 151 and can therefore be varied according to specific requirements, for example, based on the other structural and/or functional features of the engine and/or of the vehicle which the engine operates in. The at least one mathematical relation defines a target trend of the at least one physical status quantity as a function of the physical output quantity.

The operating sequence SO comprises a second step of obtaining. The control unit 151 is configured and/or programmed to perform the second step of obtaining and/or cause it to be performed.

During the second step of obtaining, the control system 15 automatically obtains at least one deviation value. The at least one deviation value corresponds to the deviation of the at least one status value VS from the aforementioned at least one target value VD. The at least one deviation value is the difference between the at least one status value VS and the at least one target value VD.

In Figures 2-3, the second step of obtaining is represented by the block labelled 02. In Figure 2, the at least one deviation value is represented by the arrow labelled VSC.

The second step of obtaining 02 is performed after the step of determining DM because the at least one target value VD is needed to obtain the at least one deviation value.

The operating sequence SO comprises a step of deriving. The control unit 151 is configured and/or programmed to perform the step of deriving.

During the step of deriving, the control system 15 automatically derives (or calculates) at least one control value. The at least one control value is derived from the at least one deviation value VSC.

In Figures 2-3, the step of deriving is represented by the block labelled DR.

In Figure 2, the at least one control value is represented by the arrow labelled VC.

The operating sequence SO comprises at least one step of driving, during which the control unit 151 sends at least one control signal to the intake motor. The at least one control signal indicates the at least one control value VC.

The operating sequence SO comprises at least one step of regulating, during which the at least one intake motor applies at least one regulating action on the at least one compressor, so that the at least one physical control quantity follows the at least one control value VC and thus so that the speed or acceleration of the rotational movement of the at least one compressor follows the at least one control value VC.

The at least one control value VC is used in the step of regulating in such a way that the at least one physical status quantity, hence the aforementioned flow rate of the at least one intake flow, follows the at least one target value.

In Figure 2, the step of regulating is represented by the block labelled RG. If the at least one physical status quantity comprises a first physical status quantity and a second physical status quantity, the at least one status value VS comprises a first status value VS1 and a second status value VS2. The first status value VS1 corresponds to the current value of the first physical status value. The second status value VS2 corresponds to the current value of the second physical status value.

The arrow labelled VS in Figure 2 is labelled VS1, VS2 in Figure 3 to represent the fact that the at least one status value VS could comprise the first status value VS1 and the second status value VS2.

If the at least one physical status quantity comprises the first physical status quantity and the second physical status quantity, the aforementioned at least one target value VD comprises a first target value VD1 and a second target value VD2. The first target value VD1 is a target value for the at least one physical status quantity and the second target value VD2 is a target value for the second physical status quantity.

The arrow labelled VD in Figure 2 is labelled VD1, VD2 in Figure 3 to represent the fact that the at least one target value VD could comprise the first target value VD1 and the second target value VD2.

If the at least one physical status quantity comprises a first physical status quantity and a second physical status quantity, the at least one deviation value VSC comprises a first deviation value VSC1 and a second deviation value VSC2. The first deviation value VSC1 corresponds to the deviation of the first status value VS1 from the first target value VD1. The first deviation value SC1 is the difference between the first status value VS1 and the first target value VD1. The second deviation value VSC2 corresponds to the deviation of the second status value VS2 from the second target value VD2. The second deviation value VSC2 is the difference between the second status value VS2 and the second target value VD2.

The arrow labelled VSC in Figure 2 is labelled VSC1, VSC2 in Figure 3 to represent the fact that the at least one deviation value VSC could comprise a first deviation value VSC1 and a second deviation value VSC2.

If the at least one physical status quantity comprises the first physical status quantity and the second physical status quantity, the aforementioned at least one mathematical relation comprises a first mathematical relation and a second mathematical relation.

During the step of determining DM, the control system 15 automatically determines the first target value VD1 by calculating the first target value VD1 itself from the aforementioned output value VU and applying the aforementioned first mathematical relation to that output value VU. The first mathematical relation places the physical output quantity in mathematical correlation with the first physical status quantity. The first mathematical relation is stored in the control unit 151 and can therefore be varied according to specific requirements, for example, based on the other structural and/or functional features of the engine and/or of the vehicle which the engine operates in. The first mathematical relation defines a target trend of the first physical status quantity, which may be the flow rate of the first intake flow A1, as a function of the physical output quantity, which may be the angular speed or acceleration of the shaft 121.

The first mathematical relation may comprise one or more mathematical functions.

In Figure 1, the control unit 151 includes a first curve P1. The first curve P1 is the target trend of the flow rate of the first intake flow A1, considered along the Y-axis, as a function of the angular speed of the shaft, considered along the X-axis. The first curve P1 is the representation of an exemplary, generic mathematical function which may form part of the first mathematical relation.

During the step of determining DM, the control system 15 automatically determines the second target value VD2 by calculating the second target value VD2 itself from the aforementioned output value VU and applying the aforementioned second mathematical relation to that output value VU.

The second mathematical relation places the physical output quantity in mathematical correlation with the second physical status quantity. The second mathematical relation is stored in the control unit 151 and can therefore be varied according to specific requirements, for example, based on the other structural and/or functional features of the engine and/or of the vehicle which the engine operates in. The second mathematical relation defines a target trend of the second physical status quantity, which may be the flow rate of the second intake flow, as a function of the physical output quantity, which may be the angular speed or acceleration of the shaft 121.

The second mathematical relation may comprise one or more mathematical functions.

In Figure 1, the control unit 151 includes a second curve P2. The second curve P2 is the target trend of the flow rate of the second intake flow A2, considered along the Y-axis, as a function of the angular speed of the shaft, considered along the X-axis. The second curve P2 is the representation of an exemplary, generic mathematical function which may form part of the second mathematical relation.

If the at least one physical status quantity comprises the first physical status quantity and the second physical status quantity, the at least one status sensor comprises a first status sensor 153 and a second status sensor 154.

If the at least one physical status quantity comprises the first physical status quantity and the second physical status quantity, the aforementioned at least one other step of measuring comprises a first other step of measuring and a second other step of measuring. During the first other step of measuring, the first status sensor 153 measures the first status value VS1. During the second other step of measuring, the second status sensor 154 measures the second status value VS2.

If the at least one physical status quantity comprises the first physical status quantity and the second physical status quantity, the at least one other step of sending comprises a first other step of sending and a second other step of sending. During the first other step of sending, the first status sensor 153 sends a first status signal SS1 to the control unit 151.

The first status signal SS1 indicates the first status value VS1. During the second other step of sending, the second status sensor 154 sends a second status signal SS2 to the control unit 151. The second status signal SS2 indicates the second status value VS2.

If the at least one physical status quantity comprises the first physical status quantity and the second physical status quantity, the aforementioned at least one control value VC comprises a first control value VC1 and a second control value VC2.

Tthe arrow labelled VC in Figure 2 is labelled VC1, VC2 in Figure 3 to represent the fact that the at least one control value VC could comprise a first control value VC1 and a second control value VC2.

During the step of deriving DR, the control system 15 automatically derives the first control value VC1 from the aforementioned first deviation value VSC1. During the step of deriving DR, the control system 15 automatically derives the second control value VC2 from the aforementioned second deviation value VSC2.

If the at least one physical status quantity comprises the first physical status quantity and the second physical status quantity, the at least one step of driving comprises a first step of driving and a second step of driving. During the first step of driving, the control unit 151 sends a first control signal SC1 to the first intake motor 131e. The first control signal SC1 indicates the first control value VC1. During the first step of driving, the control unit 151 sends a second control signal SC2 to the second intake motor 132e. The second control signal SC2 indicates the second control value VC2.

If the at least one physical status quantity comprises the first physical status quantity and the second physical status quantity, the at least one step of regulating comprises a first step of regulating and a second step of regulating.

In Figure 3, the first step of regulating and the second step of regulating are represented by the block labelled RG1, RG2. RG1 denotes the first step of regulating and RG2 denotes the second step of regulating.

During the first step of regulating RG1, the first motor 131e applies a first regulating action on the first compressor 131d so that the first physical control quantity follows the aforementioned first control value VC1, and thus so that the speed or acceleration of the rotational movement of the first compressor 131d follows the first control value VC1. In Figure 1, the first regulating action is indicated by the arrow AR1.

During the second step of regulating, the second motor 132e applies a second regulating action on the second compressor 132d so that the second physical control quantity follows the aforementioned second control value VC2, and thus so that the speed or acceleration of the rotational movement of the second compressor 132d follows the second control value VC2. In Figure 1, the second regulating action is indicated by the arrow AR2.

The first control value VC1 is used in the first step of regulating RG1 in such a way that the first physical status quantity follows the first target value VD1. The second control value VC2 is used in the second step of regulating RG2 in such a way that the second physical status quantity follows the second target value VD2.

Since the control system 15 is configured to perform the operating sequence for each time instant of a series of successive time instants, the control system 15 is configured to automatically and actively control the time trend of the at least one physical status quantity as a function of the time trend of the physical output quantity and independently of any exhaust flow discharged from the chamber 11. Thus, the control system 15 is configured to automatically and actively control the flow rate of the at least one intake flow (or each of the flow rates of the first intake flow A1 and second intake flow A2), as a function of the time trend of the output power (or angular speed or acceleration of the shaft 121) and independently of any exhaust flow discharged from the chamber 11.

Since the operating sequence SO performed for each of the instants comprises the step of driving, the control system 15 is, in order to automatically and actively control the time trend of the at least one physical status quantity, configured to automatically and actively control the time trend of the at least one physical status quantity as a function of the time trend of the physical output quantity and independently of any exhaust flow discharged from the chamber. Thus, the control system 15 is configured to automatically and actively control the flow rate of the at least one intake flow (or each of the flow rates of the first intake flow A1 and second intake flow A2), in order to automatically and actively control the speed or acceleration of the rotational movement of the at least one compressor (or each of the respective rotational movements of the first compressor and second compressor) as a function of the time trend of the output power (or angular speed or acceleration of the shaft 121) and independently of any exhaust flow discharged from the chamber.

The control system 15 is thus an active control system configured to automatically and actively control the time trend of the at least one physical status quantity and, in order to automatically and actively control the time trend of the at least one physical status quantity, to actively and automatically control the time trend of the at least one physical control quantity.

It should be borne in mind that the control unit 151 and/or at least one of the intake motors could be integrated in at least one electronic power step.

During the first step of obtaining O1, the control system 15 might obtain a first opening value. The at least one opening value indicates at least one extent of opening of at least one intake valve. That way, the control system 15 can automatically and actively control the time trend of the at least one physical status quantity also as a function of the time trend of the at least one extent of opening.

The control system might also comprises at least one opening sensor 155.

The first step of obtaining 151 comprises, in this case, at least one further step of measuring, during which the at least one opening sensor 155 measures the at least one opening value. The at least one opening value might comprise a first opening value and at least a second opening value.

The first opening value might indicate a first extent of opening. The first extent of opening is an extent of opening of the first intake valve 131c. The second opening value might indicate a second extent of opening. The second extent of opening is an extent of opening of the second intake valve 132c.

The first step of obtaining 151 comprises, in this case, at least one further step of sending, during which the at least one opening sensor 155 sends the at least one opening signal SA to the control unit 151. The at least one opening signal SA indicates the at least one opening value. The at least one opening signal SA might comprise a first opening signal, indicating the first opening value, and a second opening signal, indicating a second opening value.

In this case, during the step of determining DM, the control system 15 automatically determines the at least one target value VD (or the first target value VD1 or the second target value VD2) by calculating the at least one target value VD itself from the aforementioned output value VU and from the aforementioned at least one opening value (or from the aforementioned first or second opening value) and applying the aforementioned at least one mathematical relation (or the aforementioned first or second mathematical relation) to the output value VU and to the at least one opening value (or to the aforementioned first or second opening value).

In this case, the at least one mathematical relation (or the aforementioned first or second mathematical relation) places the physical output quantity and the at least one extent of opening (or the aforementioned first or second extent of opening) in mathematical correlation with the at least one physical status quantity (or with the first or second physical status quantity).

In this case, the at least one mathematical relation defines a target trend of the at least one physical status quantity as a function of the physical output quantity and as a function of the at least one extent of opening.

According to another aspect of it, this disclosure relates to the control system 15 as a free-standing system.

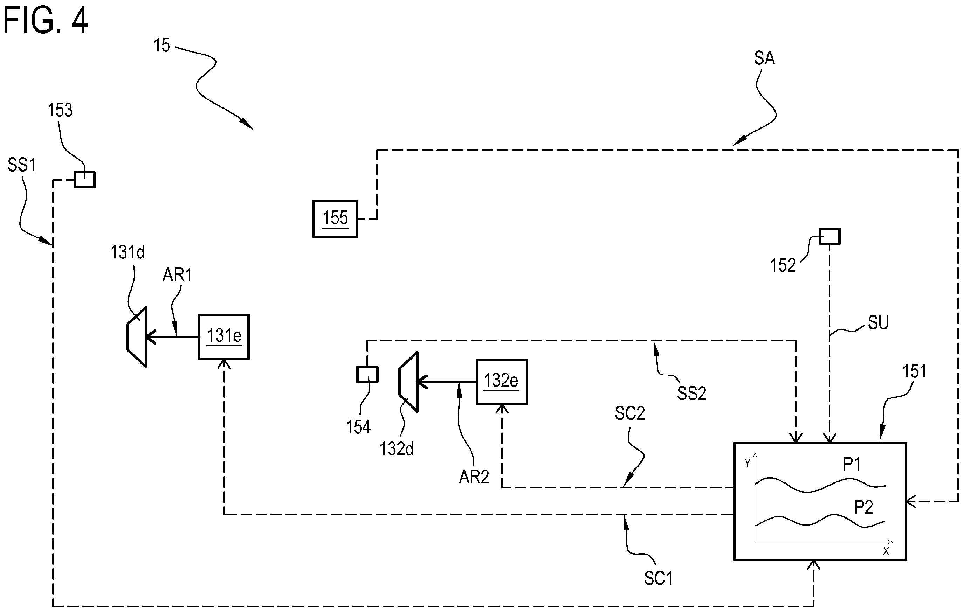

The free-standing control system 15 is shown in Figure 4.

The aforementioned at least one intake motor can also be considered as part of the control system 15. Thus, if the at least one motor comprises the first intake motor 131e and the second intake motor 132e, then the first intake motor 131e and the second intake motor 132e can also be considered as part of the control system 15. Thus, the control system 15, as shown diagrammatically in Figure 4, also comprises at least the first intake motor 131e and the second intake motor 132e.

The aforementioned at least one compressor can also be considered as part of the control system 15. Thus, if the at least one compressor comprises the first compressor 131d and the second compressor 132d, then the first compressor 131d and the second compressor 132d can also be considered as part of the control system 15. Thus, the control system 15, as shown diagrammatically in Figure 4, also comprises at least the first compressor 131d and the second compressor 132d. A method for operating an engine according to this disclosure comprises an intake step.

During the intake step, at least the first forced intake flow and the second forced intake flow are let into a combustion chamber 11 of the engine 1.

The method comprises an exhaust step, during which at least the first exhaust flow of the fluid is let out of the chamber

The method comprises a control step.

During the control step, the time trend of the flow rate of the first intake flow and the time trend of the flow rate of the second intake flow are automatically and actively controlled as a function of the physical output quantity and independently of any exhaust flow discharged from the chamber during the exhaust step.

During the intake step, the first compressor and the second compressor are each subjected to a respective rotational movement, so that the speed or acceleration of the rotational movement of the first compressor and second compressor, respectively, influences the flow rate of the first intake flow and the second intake flow, respectively.

The control step is performed by automatically and actively controlling the time trend of the speed or acceleration of the first compressor and the speed or acceleration of the second compressor, respectively, as a function of the time trend of the physical output quantity and independently of any exhaust flow discharged from the chamber during the exhaust step.

The control step comprises automatically performing the aforementioned operating sequence SO for each time instant of the aforementioned series of successive time instants.

The control system therefore allows automatically varying the aforementioned turbulence over time and/or automatically optimizing it as a function of the power delivered by the engine, so as to adapt the turbulence to specific requirements, for example, based on the other structural and/or functional features of the engine and/or of the vehicle which the engine operates in. In effect, the mathematical relation can be varied by the user as a function of such specific requirements. For example, the extent of supercharging can be optimized for all engine power states. For example, it is possible to prevent the extent of supercharging from being too low or even zero at low power states, for example at low angular speed of the shaft. This is possible because turbulence control is totally independent of any exhaust flow discharged from the combustion chamber.

Alternatively, or in addition, the turbulence can be optimized for the type of fuel the vehicle is using.

The control system of an engine according to this disclosure also allows regulating the forced intake flows very precisely in order to reduce thermal stresses in the engine components and/or to allow keeping a high compression ratio, thereby increasing the energy efficiency of the engine.

An engine according to this disclosure could be a hybrid engine configured to run on at least two different types of fuel.

The control system could be configured to perform, before each operating sequence, a step of selecting associated with the respective operating sequence. The control unit 151 is configured to perform the step of selecting. During the step of selecting, the control system automatically selects from a plurality of mathematical relations stored in the control unit 151 and as a function of the type of fuel being used by the engine, the mathematical relation to be used in the respective operating sequence.

An engine according to this disclosure is a supercharged engine which allows achieving the above mentioned aims both with reference to the operating method and with reference to the engine.

## Claims

1. A supercharged engine (1) comprising:
- a combustion chamber (11) for containing a working fluid, the engine (1) being configured to allow the fluid to be subjected, in the combustion chamber (11), to a working cycle comprising an intake step to let the fluid into the chamber (11) and an exhaust step to let the fluid out of the chamber (11);
- a piston;
- an output (12) of the engine (1);
- a supercharging system (13) configured to generate at least one forced intake flow of the fluid into the chamber (11) during the intake step, the at least one intake flow comprising a first intake flow (A1) and a second intake flow (A2), the first intake flow (A1) and the second intake flow (A2) being physically **characterized by** the first physical status quantity and by the second physical status quantity, respectively, the first physical status quantity and the second physical status quantity being a flow rate of the first intake flow (A1) and a flow rate of the second intake flow (A2), respectively;
- an exhaust system (14) configured to generate at least one exhaust flow to discharge the fluid from the chamber during said exhaust step;
- a control system (15);
wherein:
- the engine (1) is configured in such a way that the working cycle can cause a reciprocating translational movement of the piston in the chamber (11) and in such a way that the reciprocating translational movement produces a power delivered by the engine (1) through the output (12), the power delivered by the engine being correlated with a physical output quantity;
- the control system (15) is configured to automatically and actively control the time trend of the first physical status quantity and the time trend of the second physical status quantity as a function of the time trend of the physical output quantity and independently of any exhaust flow discharged from the chamber (11) during the exhaust step;
- the supercharging system (13) comprises a first compressor (131d) and a second compressor (132d) and is configured in such a way that the first compressor (131d) and the second compressor (132d) can each be subjected to a respective rotational movement, the rotational movement of the first compressor (131d) and the rotational movement of the second compressor (132d) being physically **characterized by** a first physical control quantity and a second physical control quantity, respectively, the first physical control quantity and the second physical control quantity being the speed or the acceleration of the rotational movement of the first compressor (131d) and of the second compressor (132d), respectively, the first physical status quantity and the second physical status quantity being correlated with the first physical control quantity and the second physical control quantity, respectively, so that the time trend of the first physical control quantity and of the second physical control quantity influences the time trend of the first physical status quantity and of the second physical status quantity, respectively;
- the control system (15), in order to control the time trend of the first physical status quantity and of the second physical status quantity, is configured to automatically and actively control the time trend of first physical control quantity and the time trend of second physical control quantity as a function of the time trend of the physical output quantity and independently of any exhaust flow discharged from the chamber (11) during the exhaust step;
wherein the control system (15) comprises a control unit (151), the control unit comprising a first mathematical relation (P1) and a second mathematical relation (P2) stored in the control unit itself;
wherein the control system (15) is, in order to control the time trend of the at least one physical status quantity, configured to perform, for each time instant of a series of successive time instants, a respective operating sequence (SO) which comprises:
- a first step of obtaining (O1), during which the control unit (151) automatically obtains at least one output value (VU) corresponding to the current value of the aforementioned physical output quantity;
- a step of determining (DM), during which the control unit (151) automatically determines a first target value (VD1) corresponding to a target value for the first physical status quantity, and a second target value (VD2) corresponding to a target value for the second physical status quantity;
wherein:
- during the step of determining (DM), the control unit (151) automatically determines the first target value (VD1) and the second target value (VD2) by calculating the first and second target values themselves from the aforesaid output value (VU) and applying the first mathematical relation and the second mathematical relation, respectively, to that output value (VU);
- the supercharging system (13) comprises a first intake motor (131e) and a second intake motor (132e) and is configured in such a way that the first intake motor (131e) can regulate the first physical control quantity and the second intake motor (132e) can regulate the second physical control quantity;
- during the first step of obtaining (O1), the control unit (151) automatically obtains a first status value (VS1), corresponding to the current value of the first physical status quantity, and a second status value (VS2), corresponding to the current value of the second physical status quantity;
- the operating sequence (SO) comprises a second step of obtaining (02);
- during the second step of obtaining (02), the control unit (151) automatically obtains a first deviation value (VSC1), corresponding to the deviation of the first status value (VA1) from the first target value (VD1), and a second deviation value (VSC2), corresponding to the deviation of the second status value (VA2) from the second target value (VD2); wherein the operating sequence (SO) comprises:
- at least one step of deriving (DR), during which the control unit (151) automatically derives a first control value (VC1) and a second control value (VC2), the first control value (VC1) being derived from the first deviation value (VSC1) and the second control value (VC2) being derived from the second deviation value (VSC2);
- a first step of driving and a second step of driving, during which the control unit (151) sends to the first intake motor (131e) and to the second intake motor (132e), respectively, a first control signal (SC1), indicating the first control value (VC1) and a second control signal (SC2), indicating the second control value (VC2), respectively;
- a first step of regulating (RG1) and a second step of regulating (RG2), during which the first intake motor (131e) and the second intake motor (132e), apply a first regulating action (A1) on the first compressor (131d) and a second regulating action (A2) on the second compressor (132d) respectively, based on the first control signal (SC1) and on the second control signal (SC2), respectively, so that the first physical control quantity and the second physical control quantity follow the first control value (VC1) and the second control value (VC2), respectively;
wherein the supercharging system (13) is configured in such a way that the time trend of the flow rate of the first intake flow (A1) and the time trend of the flow rate of the second intake flow (A2) influence the time trend of the turbulence of the speed field of the fluid inside the combustion chamber (11) during such a working cycle.

2. The engine according to claim 1, wherein the control system (15) comprises at least one output sensor (152);
wherein the first step of obtaining (O1) comprises:
- a step of measuring, during which the output sensor (152) measures the output value (VU);
- a step of sending, during which the output sensor (152) sends to the control unit (151) an output signal (SU) indicating the output value (VU).

3. The engine according to claim 2, wherein the control system (15) comprises a first status sensor (153) and a second status sensor (154); wherein the first step of obtaining (O1) comprises:
- a first other step of measuring, during which the first status sensor (153) measures the first status value (VS1) and a second other step of measuring, during which the second status sensor (154) measures the second status value (VS2);
- a first other step of sending, during which the first status sensor (153) sends a first status signal (SS1) to the control unit (151), and a second other step of sending, during which the second status sensor (154) sends a second status signal (SS2) to the control unit (151), the first status signal (SS1) and the second status signal (SS2) indicating the first status value (VS1) and the second status value (VS2), respectively.

4. The engine (1) according to one or more of the preceding claims, wherein the output (12) comprises a shaft (121), the physical output quantity being the speed or the acceleration of the rotational movement of the shaft (121) on itself.

## Patentansprüche

1. Aufgeladene Brennkraftmaschine (1), umfassend:
- eine Verbrennungskammer (11) zum Enthalten eines Arbeitsmediums, wobei die Brennkraftmaschine (1) ausgelegt ist, um zu erlauben, dass das Medium in der Verbrennungskammer (11) einem Arbeitszyklus unterzogen wird, umfassend einen Einlassschritt, um das Medium in die Kammer (11) einzulassen, und einem Auslassschritt, um das Medium aus der Kammer (11) auszulassen;
- einen Kolben;
- einen Ausgang (12) der Brennkraftmaschine (1);
- ein Aufladesystem (13), das ausgelegt ist, um mindestens einen Zwangseinlassstrom des Mediums in die Kammer (11) während des Einlassschritts zu erzeugen, wobei der mindestens eine Einlassstrom einen ersten Einlassstrom (A1) und einen zweiten Einlassstrom (A2) umfasst, wobei der erste Einlassstrom (A1) und der zweite Einlassstrom (A2) physikalisch jeweils durch die erste physikalische Zustandsmenge bzw. die zweite physikalische Zustandsmenge gekennzeichnet sind, wobei es sich bei der ersten physikalischen Zustandsmenge und der zweiten physikalischen Zustandsmenge jeweils um eine Durchflussmenge des ersten Einlassstroms (A1) bzw. eine Durchflussmenge des zweiten Einlassstroms (A2) handelt;
- ein Auslasssystem (14), das ausgelegt ist, um mindestens einen Auslassstrom zu erzeugen, um das Medium während des Auslassschritts aus der Kammer abzulassen;
- ein Steuerungssystem (15),
wobei
- die Brennkraftmaschine (1) so ausgelegt ist, dass der Arbeitszyklus eine Pendelverschiebebewegung des Kolbens in der Kammer (11) herbeiführen kann, und so, dass die Pendelverschiebebewegung eine Kraft erzeugt, die von der Brennkraftmaschine (1) durch den Ausgang (12) bereitgestellt wird, wobei die von der Brennkraftmaschine bereitgestellte Kraft mit einer physikalischen Ausgangsmenge korreliert ist;
- das Steuerungssystem (15) ausgelegt ist, um automatisch und aktiv den Zeittrend der ersten physikalischen Zustandsmenge und den Zeittrend der zweiten physikalischen Zustandsmenge als eine Funktion des Zeittrends der physikalischen Ausgangsmenge und unabhängig von jedem beliebigen Auslassstrom zu steuern, der während des Auslassschritts aus der Kammer (11) abgelassen wird;
- das Aufladesystem (13) einen ersten Verdichter (131d) und einen zweiten Verdichter (132d) umfasst und so ausgelegt ist, dass der erste Verdichter (131d) und der zweite Verdichter (132d) jeweils einer jeweiligen Rotationsbewegung unterzogen werden können, wobei die Rotationsbewegung des ersten Verdichters (131d) und die Rotationsbewegung des zweiten Verdichters (132d) physikalisch jeweils durch eine erste physikalische Steuerungsmenge bzw. eine zweite physikalische Steuerungsmenge gekennzeichnet sind, wobei es sich bei der ersten physikalischen Steuerungsmenge und der zweiten physikalischen Steuerungsmenge um die Geschwindigkeit oder Beschleunigung der Rotationsbewegung jeweils des ersten Verdichters (131d) bzw. des zweiten Verdichters (132d) handelt, wobei die erste physikalische Zustandsmenge und die zweite physikalische Zustandsmenge jeweils mit der ersten physikalischen Steuerungsmenge bzw. der zweiten physikalischen Steuerungsmenge korreliert sind, sodass der Zeittrend der ersten physikalischen Steuerungsmenge und der zweiten physikalischen Steuerungsmenge jeweils den Zeittrend der ersten physikalischen Zustandsmenge bzw. der zweiten physikalischen Zustandsmenge beeinflusst;
- das Steuerungssystem (15) ausgelegt ist, um automatisch und aktiv den Zeittrend der ersten physikalischen Zustandsmenge und den Zeittrend der zweiten physikalischen Zustandsmenge als eine Funktion des Zeittrends der physikalischen Ausgangsmenge und unabhängig von jedem beliebigen Auslassstrom zu steuern, der während des Auslassschritts aus der Kammer (11) abgelassen wird, um den Zeittrend der ersten physikalischen Zustandsmenge und der zweiten physikalischen Zustandsmenge zu steuern,
wobei das Steuerungssystem (15) eine Steuereinheit (151) umfasst, wobei die Steuereinheit eine erste mathematische Relation (P1) und eine zweite mathematische Relation (P2) umfasst, die in der Steuereinheit gespeichert sind,
wobei das Steuerungssystem (15) ausgelegt ist, um für jeden Augenblick einer Reihe aufeinanderfolgender Augenblicke einen jeweiligen Betriebsablauf (SO) durchzuführen, um den Zeittrend der mindestens einen physikalischen Zustandsmenge zu steuern, wobei der jeweilige Betriebsablauf (SO) umfasst:
- einen ersten Schritt zum Erhalten (01), in dessen Verlauf die Steuereinheit (151) automatisch mindestens einen Ausgangswert (VU) erhält, der dem Istwert der genannten physikalischen Ausgangsmenge entspricht;
- einen Schritt zum Ermitteln (DM), in dessen Verlauf die Steuereinheit (151) automatisch einen ersten Zielwert (VD1) ermittelt, der einem Zielwert für die erste physikalische Zustandsmenge entspricht, und einen zweiten Zielwert (VD2), der einem Zielwert für die zweite physikalische Zustandsmenge entspricht,
wobei
- die Steuereinheit (151) während des Schritts zum Ermitteln (DM) automatisch den ersten Zielwert (VD1) und den zweiten Zielwert (VD2) durch Berechnen des ersten und zweiten Zielwerts anhand des genannten Ausgangswerts (VU) und Anwenden jeweils der ersten mathematischen Relation bzw. der zweiten mathematischen Relation auf diesen Ausgangswert (VU) ermittelt;
- das Aufladesystem (13) einen ersten Einlassmotor (131e) und einen zweiten Einlassmotor (132e) umfasst und so ausgelegt ist, dass der erste Einlassmotor (131e) die erste physikalische Steuerungsmenge regeln kann und der zweite Einlassmotor (132e) die zweite physikalische Steuerungsmenge regeln kann;
- die Steuereinheit (151) während des ersten Schritts zum Erhalten (01) automatisch einen ersten Zustandswert (VS1) erhält, der dem Istwert der ersten physikalischen Zustandsmenge entspricht, und einen zweiten Zustandswert (VS2), der dem Istwert der zweiten physikalischen Zustandsmenge entspricht;
- der Betriebsablauf (SO) einen zweiten Schritt zum Erhalten (02) umfasst;
- die Steuereinheit (151) während des zweiten Schritts zum Erhalten (02) automatisch einen ersten Abweichungswert (VSC1) erhält, der der Abweichung des ersten Zustandswerts (VA1) vom ersten Zielwert (VD1) entspricht, und einen zweiten Abweichungswert (VSC2), der der Abweichung des zweiten Zustandswerts (VA2) vom zweiten Zielwert (VD2) entspricht,
wobei der Betriebsablauf (SO) umfasst:
- mindestens einen Schritt zum Ableiten (DR), in dessen Verlauf die Steuereinheit (151) automatisch einen ersten Steuerungswert (VC1) und einen zweiten Steuerungswert (VC2) ableitet, wobei der erste Steuerungswert (VC1) vom ersten Abweichungswert (VSC1) abgeleitet wird und der zweite Steuerungswert (VC2) vom zweiten Abweichungswert (VSC2) abgeleitet wird;
- einen ersten Schritt zum Antreiben und einen zweiten Schritt zum Antreiben, in deren Verlauf die Steuereinheit (151) dem ersten Einlassmotor (131e) bzw. dem zweiten Einlassmotor (132e) jeweils ein erstes Steuerungssignal (SC1) sendet, das den ersten Steuerungswert (VC1) angibt, bzw. ein zweites Steuerungssignal (SC2), das den zweiten Steuerungswert (VC2) angibt;
- einen ersten Schritt zum Regulieren (RG1) und einen zweiten Schritt zum Regulieren (RG2), in deren Verlauf jeweils der erste Einlassmotor (131e) und der zweite Einlassmotor (132e) einen ersten Regulierungsvorgang (A1) auf den ersten Verdichter (131d) bzw. einen zweiten Regulierungsvorgang (A2) auf den zweiten Verdichter (132d) anwenden, basierend jeweils auf dem ersten Steuerungssignal (SC1) bzw. dem zweiten Steuerungssignal (SC2), sodass die erste physikalische Steuerungsmenge und die zweite physikalische Steuerungsmenge jeweils dem ersten Steuerungswert (VC1) bzw. dem zweiten Steuerungswert (VC2) folgen,
wobei das Aufladesystem (13) so ausgelegt ist, dass der Zeittrend der Durchflussmenge des ersten Einlassstroms (A1) und der Zeittrend der Durchflussmenge des zweiten Einlassstroms (A2) den Zeittrend der Verwirbelung des Geschwindigkeitsbereichs des Mediums in der Verbrennungskammer (11) während eines derartigen Arbeitszyklus beeinflusst.

2. Brennkraftmaschine nach Anspruch 1, wobei das Steuerungssystem (15) mindestens einen Ausgangssensor (152) umfasst,
wobei der erste Schritt zum Erhalten (01) umfasst:
- einen Schritt zum Messen, in dessen Verlauf der Ausgangssensor (152) den Ausgangswert (VU) misst;
- einen Schritt zum Senden, in dessen Verlauf der Ausgangssensor (152) der Steuereinheit (151) ein Ausgangssignal (SU) sendet, das den Ausgangswert (VU) angibt.

3. Brennkraftmaschine nach Anspruch 2, wobei das Steuerungssystem (15) einen ersten Zustandssensor (153) und einen zweiten Zustandssensor (154) umfasst,
wobei der erste Schritt zum Erhalten (01) umfasst:
- einen ersten weiteren Schritt zum Messen, in dessen Verlauf der erste Zustandssensor (153) den ersten Zustandswert (VS1) misst, und einen zweiten weiteren Schritt zum Messen, in dessen Verlauf der zweite Zustandssensor (154) den zweiten Zustandswert (VS2) misst;
- einen ersten weiteren Schritt zum Senden, in dessen Verlauf der erste Zustandssensor (153) ein erstes Zustandssignal (SS1) an die Steuereinheit (151) sendet, und einen zweiten weiteren Schritt zum Senden, in dessen Verlauf der zweite Zustandssensor (154) ein zweites Zustandssignal (SS2) an die Steuereinheit (151) sendet, wobei das erste Zustandssignal (SS1) und das zweite Zustandssignal (SS2) jeweils den ersten Zustandswert (VS1) bzw. den zweiten Zustandswert (VS2) angeben.

4. Brennkraftmaschine (1) nach einem oder mehreren der vorhergehenden Ansprüche, wobei der Ausgang (12) eine Welle (121) umfasst, wobei es sich bei der physikalischen Ausgangsmenge um die Geschwindigkeit oder Beschleunigung der Rotationsbewegung der Welle (121) um sich selbst behandelt.

## Revendications

1. Moteur suralimenté (1) comprenant :
- une chambre de combustion (11) servant à contenir une fluide de service, le moteur (1) étant configuré pour permettre au fluide d'être soumis, dans la chambre de combustion (11), à un cycle de travail comprenant une étape d'admission pour laisser entrer le fluide dans la chambre (11) et une étape d'évacuation pour laisser sortir le fluide de la chambre (11) ;
- un piston ;
- une sortie (12) du moteur (1) ;
- un système de suralimentation (13) configuré pour générer au moins un flux d'admission forcé du fluide dans la chambre (11) pendant l'étape d'admission, l'au moins un flux d'admission comprenant un premier flux d'admission (A1) et un second flux d'admission (A2), le premier flux d'admission (A1) et le second flux d'admission (A2) étant physiquement caractérisés, respectivement, par la première quantité physique d'état et par la seconde quantité physique d'état, la première quantité physique d'état et la seconde quantité physique d'état étant, respectivement, un débit du premier flux d'admission (A1) et un débit du second flux d'admission (A2) ;
- un système d'évacuation (14) configuré pour générer au moins un flux d'évacuation pour évacuer le fluide de la chambre pendant ladite étape d'évacuation ;
- un système de contrôle (15) ;
dans lequel :
- le moteur (1) est configuré de manière à ce que le cycle de travail puisse provoquer un mouvement de translation réciproque du piston dans la chambre (11) et de manière à ce que le mouvement de translation réciproque produise une énergie fournie par le moteur (1) à travers la sortie (12), l'énergie fournie par le moteur étant corrélée à une quantité physique de sortie ;
- le système de contrôle (15) est configuré pour automatiquement et activement contrôler la tendance temporelle de la première quantité physique d'état et la tendance temporelle de la seconde quantité physique d'état en fonction de la tendance temporelle de la quantité physique de sortie et indépendamment de n'importe quel flux d'évacuation évacué de la chambre (11) pendant l'étape d'évacuation ;
- le système de suralimentation (13) comprend un premier compresseur (131d) et un second compresseur (132d) et est configuré de manière à ce que le premier compresseur (131d) et le second compresseur (132d) puissent être soumis à un mouvement de rotation respectif, le mouvement de rotation du premier compresseur (131d) et le mouvement de rotation du second compresseur (132d) étant physiquement caractérisés, respectivement, par une première quantité physique de contrôle et une seconde quantité physique de contrôle, la première quantité physique de contrôle et la seconde quantité physique de contrôle étant, respectivement, la vitesse ou l'accélération du mouvement de rotation du premier compresseur (131d) et du second compresseur (132d), la première quantité physique d'état et la seconde quantité physique d'état étant, respectivement, corrélées à la première quantité physique de contrôle et à la seconde quantité physique de contrôle de sorte que la tendance temporelle de la première quantité physique de contrôle et de la seconde quantité physique de contrôle influence, respectivement, la tendance temporelle de la première quantité physique d'état et de la seconde quantité physique d'état ;
- le système de contrôle (15), afin de contrôler la tendance temporelle de la première quantité physique d'état et de la seconde quantité physique d'état, est configuré pour automatiquement et activement contrôler la tendance temporelle de la première quantité physique de contrôle et la tendance temporelle de la seconde quantité physique de contrôle en fonction de la tendance temporelle de la quantité physique de sortie et indépendamment de n'importe quel flux d'évacuation évacué de la chambre (11) pendant l'étape d'évacuation ;
dans lequel le système de contrôle (15) comprend une unité de contrôle (151), l'unité de contrôle comprenant une première relation mathématique (P1) et une seconde relation mathématique (P2) mémorisées dans l'unité de contrôle elle-même ;
dans lequel le système de contrôle (15) est, afin de contrôler la tendance temporelle de l'au moins une quantité physique d'état, configuré pour exécuter, pour chaque moment de temps d'une série de moments de temps successifs, une séquence opérationnelle (SO) respective comprenant :
- une première étape d'obtention (01), durant laquelle l'unité de contrôle (151) obtient automatiquement au moins une valeur de sortie (VU) correspondant à la valeur actuelle de la quantité physique de sortie susmentionnée ;
- une étape de détermination (DM), durant laquelle l'unité de contrôle (151) détermine automatiquement une première valeur cible (VD1) correspondant à une valeur cible pour la première quantité physique d'état, et une seconde valeur cible (VD2) correspondant à une valeur cible pour la seconde quantité physique d'état ;
dans lequel :
- lors de l'étape de détermination (DM), l'unité de contrôle (151) détermine automatiquement la première valeur cible (VD1) et la seconde valeur cible (VD2) en calculant les première et seconde valeurs cibles elles-mêmes à partir de la valeur de sortie (VU) susmentionnée et en appliquant, respectivement, la première relation mathématique et la seconde relation mathématique à ladite valeur de sortie (VU) ;
- le système de suralimentation (13) comprend un premier moteur d'admission (131e) et un second moteur d'admission (132e) et est configuré de manière à ce que le premier moteur d'admission (131e) puisse régler la première quantité physique de contrôle et le second moteur d'admission (132e) puisse régler la seconde quantité physique de contrôle ;
- lors de la première étape d'obtention (01), l'unité de contrôle (151) obtient automatiquement une première valeur d'état (VS1) correspondant à la valeur actuelle de la première quantité physique d'état, et une seconde valeur d'état (VS2) correspondant à la valeur actuelle de la seconde quantité physique d'état ;
- la séquence opérationnelle (SO) comprend une seconde étape d'obtention (02) ;
- lors de la seconde étape d'obtention (02), l'unité de contrôle (151) obtient automatiquement une première valeur de déviation (VSC1) correspondant à la déviation de la première valeur d'état (VA1) de la première valeur cible (VD1), et une seconde valeur de déviation (VSC2) correspondant à la déviation de la seconde valeur d'état (VA2) de la seconde valeur cible (VD2) ; dans lequel la séquence opérationnelle (SO) comprend :
- au moins une étape de déduction (DR) durant laquelle l'unité de contrôle (151) déduit automatiquement une première valeur de contrôle (VC1) et une seconde valeur de contrôle (VC2), la première valeur de contrôle (VC1) étant déduite de la première valeur de déviation (VSC1) et la seconde valeur de contrôle (VC2) étant déduite de la seconde valeur de déviation (VSC2) ;
- une première étape d'entraînement et une seconde étape d'entraînement, pendant lesquelles l'unité de contrôle (151) envoie, respectivement, au premier moteur d'admission (131e) et au second moteur d'admission (132e), respectivement, un premier signal de contrôle (SC1), indiquant la première valeur de contrôle (VC1), et un second signal de contrôle (SC2), indiquant la seconde valeur de contrôle (VC2) ;
- une première étape de réglage (RG1) et une seconde étape de réglage (RG2), pendant lesquelles le premier moteur d'admission (131e) et le second moteur d'admission (132e) appliquent, respectivement, une première action de réglage (A1) sur le premier compresseur (131d) et une seconde action de réglage (A2) sur le second compresseur (132d) sur la base, respectivement, du premier signal de contrôle (SC1) et du second signal de contrôle (SC2) de sorte que la première quantité physique de contrôle et la seconde quantité physique de contrôle suivent, respectivement, la première valeur de contrôle (VC1) et la seconde valeur de contrôle (VC2) ;
dans lequel le système de suralimentation (13) est configuré de manière à ce que la tendance temporelle du débit du premier flux d'admission (A1) et la tendance temporelle du débit du second flux d'admission (A2) influencent la tendance temporelle de la turbulence du champ de vitesse du fluide à l'intérieur de la chambre de combustion (11) pendant ledit cycle de travail.

2. Moteur selon la revendication 1, dans lequel le système de contrôle (15) comprend au moins un capteur de sortie (152) ;
dans lequel la première étape d'obtention (01) comprend :
- une étape de mesure, durant laquelle le capteur de sortie (152) mesure la valeur de sortie (VU) ;
- une étape d'envoi, durant laquelle le capteur de sortie (152) envoie à l'unité de contrôle (151) un signal de sortie (SU) indiquant la valeur de sortie (VU) .

3. Moteur selon la revendication 2, dans lequel le système de contrôle (15) comprend un premier capteur d'état (153) et un second capteur d'état (154) ;
dans lequel la première étape d'obtention (01) comprend :
- une autre première étape de mesure, durant laquelle le premier capteur d'état (153) mesure la première valeur d'état (VS1) et une autre seconde étape de mesure, durant laquelle le second capteur d'état (154) mesure la seconde valeur d'état (VS2) ;
- une autre première étape d'envoi, durant laquelle le premier capteur d'état (153) envoie un premier signal d'état (SS1) à l'unité de contrôle (151), et une autre seconde étape d'envoi, durant laquelle le second capteur d'état (154) envoie un second signal d'état (SS2) à l'unité de contrôle (151), le premier signal d'état (SS1) et le second signal d'état (SS2) indiquant, respectivement, la première valeur d'état (VS1) et la seconde valeur d'état (VS2).

4. Moteur (1) selon l'une ou plusieurs des revendications précédentes, dans lequel la sortie (12) comprend un arbre (121), la quantité physique de sortie étant la vitesse ou l'accélération du mouvement de rotation de l'arbre (121) sur lui-même.
